# EUROPÄISCHE PATENTSCHRIFT

(11) **EP 0 753 379 B1**
(45) Veröffentlichungstag und Bekanntmachung des Hinweises auf die Patenterteilung: **28.07.1999**
(21) Anmeldenummer: 96107846.6
(22) Anmeldetag: 17.05.1996
(51) Int. Cl.: B23Q 16/00, B23Q 3/18

(54) **Bearbeitungsstation für eine spanabhebende Bearbeitung eines Werkstückes**
Machining centre for material removal machining of a workpiece
Station d'usinage par enlèvement de copeaux

(30) Priorität: 14.07.1995 DE 19525701
(43) Veröffentlichungstag der Anmeldung: 15.01.1997
(73) Patentinhaber: Bayerische Motoren Werke Aktiengesellschaft, 80788 München (DE)
(72) Erfinder: Gross, Johann, 81475 München (DE); Steinbichler, Rainer, 85716 Unterschleissheim (DE)

(56) Entgegenhaltungen:
- DE-A- 2 445 559
- GB-A- 2 008 991
- US-A- 4 562 391
- US-A- 4 662 503
- US-A- 4 896 086
- US-A- 4 919 586

## Beschreibung

Die Erfindung bezieht sich nach dem Oberbegriff des Patentanspruches 1 auf eine Bearbeitungsstation für eine spanabhebende Bearbeitung eines Werkstückes, umfassend eine mittels eines mehrachsigen Industrieroboters mit einem an einer roboterseitigen Greifeinrichtung positioniert gehaltenen Werkstück beschickbare Bearbeitungsmaschine mit einer eine Schiebepassungs-Paarung aufweisenden Positionier-Vorrichtung für das Werkstück, wobei das während der Bearbeitung an der Greifeinrichtung verbleibende Werkstück mittels des Industrieroboters in Schiebepassungs-Richtung an der Bearbeitungsmaschine spielfrei auf Anschlag gehalten bzw. fixiert ist, und gegebenenfalls im Bewegungsraum des Industrieroboters entsprechend aufeinander folgender, unterschiedlicher Bearbeitungen mehrere Bearbeitungsmaschinen mit jeweiliger Positionier-Vorrichtung vorgesehen sind.

Diese aus der GB-A 2 008 991 bekannte Bearbeitungsstation ermöglicht eine vorteilhaft genaue Positionierung des Werkstückes mittels Passungs-Paarungen durch den Industrieroboter in/an einer der Bearbeitungsmaschine zugeordneten Aufnahme-Vorrichtung für eine spanabhebende Bearbeitung mit einer in engen Toleranzen liegenden Formgebung des Werkstückes.

Der Erfindung liegt die Aufgabe zugrunde, die gattungsgemäße Bearbeitungsstation für ein flexibles Fertigungssystem derart weiterzubilden, daß die Bearbeitungsstation für Sonderfertigungen oder kurzfristig abweichend zu fertigenden Serien-Werkstücken rasch in einer Prozeßkette zu installieren ist.

Diese Aufgabe ist mit dem Patentanspruch 1 dadurch gelöst, daß jeweils aus einer Bearbeitungsmaschine und einer Positionier-Vorrichtung gebildete Einheiten entsprechend den unterschiedlichen Bearbeitungen an zumindest fünf Seiten eines quaderförmigen Werkstückes horizontal und/oder vertikal angeordnet sind für eine Verbringung des Werkstückes mittels eines einzigen Industrieroboters von Einheit zu Einheit, wobei die Bearbeitungsmaschine jeder Einheit aus einer ortsfest angeordneten Trägerplatte für entsprechend einem vorbestimmten Bearbeitungsbild fest angeordnete, gesonderte Bearbeitungseinheiten gebildet ist mit einzeln betreibbaren Werkzeugspindeln, und daß die Positioniervorrichtung jeder Einheit an der Trägerplatte der Bearbeitungsmaschine quer angeordnete Stützplatten umfaßt mit an den freien Stirnseiten angeordneten Pass-Zapfen sowie an diesen Stirnseiten vorgesehenen Anschlägen.

Die erfindungsgemäße Bearbeitungsstation weist in vorteilhafter Weise ein hohes Maß an Integration in jedes bekannte Fertigungssystem, wie Transferstraße oder Fertigungszelle mit CNC-Maschinen auf, womit sich kostenaufwendig, auf spezielle Formgebung abgestellte Sondermaschinen in vorteilhafter Weise erübrigen. Weiter ist die durch ihren einfachen Aufbau vorteilhaft leicht abwandelbare Bearbeitungsstation auch für eine stand-alone-Anordnung geeignet.

Insbesondere sind mit der erfindungsgemäßen Kombination von Bearbeitungsmaschinen und Positionier-Vorrichtungen zu jeweils eigenständigen Einheiten für unterschiedliche Bearbeitungen in vorteilhafter Weise auf jeden besonderen Bearbeitungsfall abgestellte Sondermaschinen vermieden, wobei mit der räumlich vorteilhaft kompakten Anordnung der im Aufbau einfach gestalteten Einheiten sich ein geringer Platzbedarf ergibt und für den Industrieroboter kurze Bedienwege. Der einfache Aufbau jeder Einheit ist weiter kostengünstig dadurch gestaltet, daß die ortsfest angeordnete Trägerplatte jeder Bearbeitungsmaschine mit entsprechend einem bestimmten Bearbeitungs- bzw. Lochbild angeordneten Bearbeitungseinheiten ausgerüstet ist. Zum einfachen Aufbau jeder Einheit tragen ferner die an jeder Trägerplatte quer angeordneten Stützplatten mit den Paßzapfen und den Anschlägen bei, womit jede Einheit einerseits für ein vertikales Stapeln der Einheiten zu einem Turm von Bearbeitungsmaschinen dient und die andererseits die Werkzeugspindeln der Bearbeitungseinheiten abschirmen.

In Fortbildung der Erfindung wird zur Erzielung einer vorteilhaft einfachen Ausgestaltung der Bearbeitungsstation vorgeschlagen, daß die an den Stützplatten angeordneten Paß-Zapfen mit im Werkstück angeordneten Paß-Bohrungen die der gesonderten Positionierung des Werkstückes in/an der Vorrichtung dienenden Passungs-Paarungen bilden.

Mit der Verwendung von im Werkstück vorhandenen Passungs-Bohrungen, die in einer vorausgehenden Fertigungsstation erzeugt sind, ist die Ausgestaltung der Bearbeitungsstation vorteilhaft vereinfacht und weiter auf die Passungs-Bohrungen maßlich abgestellte weitere spanabhebende Formgebungen in engen Maß-Toleranzen erzielt.

Für eine vorteilhaft rasche Eingliederung bei geringstmöglichem Platzbedarf in eine der vorgenannten Prozeßketten bzw. in eines der vorgenannten Fertigungssysteme wird in weiterer Fortbildung der erfindungsgemäßen Bearbeitungsstation vorgeschlagen, daß die über einem Gestell zu einem ortsfesten Turm angeordneten Bearbeitungsmaschinen über die Tragplatten und die Stützplatten miteinander in Verbindung stehen und daß die Werkzeugspindeln der in/an den Tragplatten angeordneten Bearbeitungseinheiten insbesondere zum Bohren, Senken, Gewindebohren, Reiben etc. entsprechend unterschiedlicher Bearbeitungen eines quaderartigen Zylinderkopfes als Werkstück dienen. Mit dieser erfindungsgemäßen Ausgestaltung kann ein relativ sperriges Werkstück, wie beispielsweise ein quaderartiger Zylinderkopf in mehreren vertikalen Etagen und damit platzsparend bearbeitet werden, was insbesondere der Integration der Bearbeitungsstation in eine Prozeßkette vorteilhaft zugute kommt.

Zur Entlastung des Industrieroboters von hohen, gegen die Greifeinrichtung des Roboters wirkenden Bearbeitungskräften kann die Greifeinrichtung in weiterer Ausgestaltung über eine steuerbare Verriegelungseinrichtung mit der jeweiligen Positionier-Vorrichtung verbindbar sind.

Weiter ist es im Rahmen der Erfindung auch denkbar, daß die Positionier-Vorrichtung relativ zu einer fest angeordneten Bearbeitungsmaschine mittels des Industrieroboters über die ein Werkstück tragende Greifeinrichtung gegen ein Werkzeug verschiebbar ist.

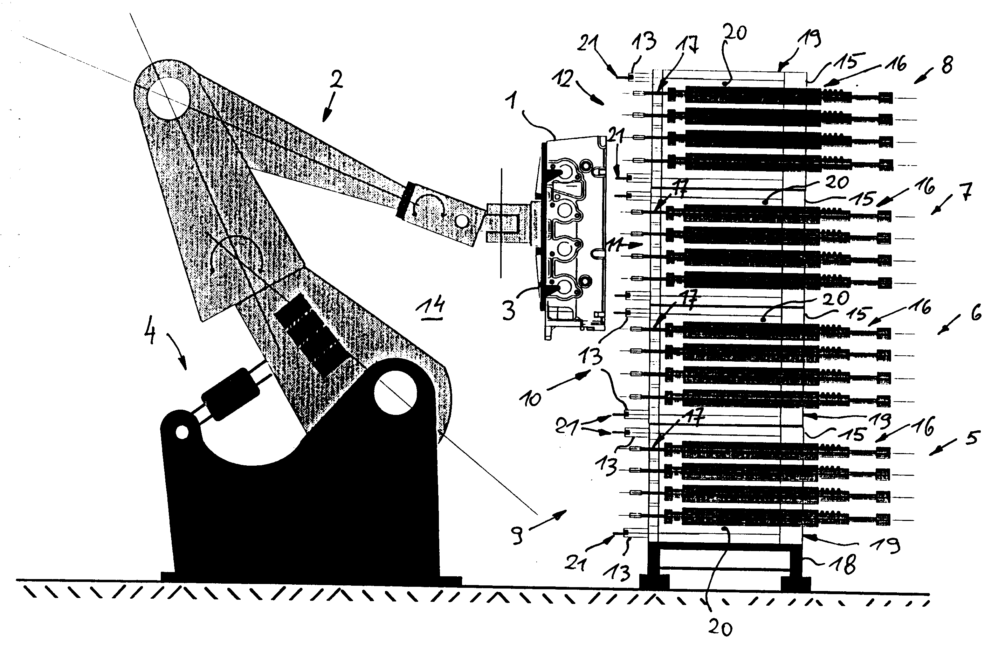

Eine bevorzugte Bearbeitungsstation ist in der einzigen Zeichnung dargestellt.

In der Bearbeitungsstation zur vorzugsweise spanabhebenden Bearbeitung eines Zylinderkopfes 1 eines nicht gezeigten Reihenmotors wird der durch einen programmgesteuerten, mehrachsigen Industrieroboter 2 mittels einer Greifeinrichtung 3 aus einer nicht dargestellten Bereitstellungsanordnung 4 einer Bearbeitungsmaschine 5, 6, 7, 8 zugeführte Zylinderkopf 1 während der Bearbeitung in einer der jeweiligen Bearbeitungsmaschine 5 bis 8 jeweils zugeordneten Vorrichtung 9, 10, 11, 12 gesondert positioniert und mittels der Greifeinrichtung 3 gegen Anschläge 13 der jeweiligen Vorrichtung 9 bis 12 gehalten.

Mit der gesonderten Positionierung des Zylinderkopfes 1 relativ zur jeweiligen Bearbeitungsmaschine 5 bis 8 mittels der jeweils zugeordneten Vorrichtung 9 bis 12 ist die für derartige Industrieroboter 2 bekannt unzureichende Positionierwiederholgenauigkeit eliminiert, so daß derartige Industrieroboter 2 bei spanabhebender Formgebung mit aufeinander bezogenen, eng tolerierten Abständen bzw. Maßen zur Positionierung und Halterung einsetzbar sind. Dies ermöglicht in vorteilhafter Weise den Einsatz relativ einfach gestalteter Bearbeitungsmaschinen 5 bis 8, die mit den zugeordneten Positionier-Vorrichtungen 9 bis 12 und dem Industrieroboter 2 eine relativ schnell und kostengünstig verfügbare Bearbeitungsstation bilden und damit kaum abwandelbare Sondermaschinen erübrigen.

Für die einfache Ausgestaltung weiter vorteilhaft sind vorgesehene Passungs-Paarungen an Elementen der Positionier-Vorrichtungen 9 bis 12 einerseits und an korrespondierenden Elementen bzw. Ausbildungen am Zylinderkopf 1 und/oder an der Greifeinrichtung 3 andererseits, wobei durch entsprechende Wahl eines Schiebepassungsspiels eine gewünscht genaue, gesonderte Positionierung des Zylinderkopfes 1 erzielt ist. Besonders vorteilhaft können hierbei im Zylinderkopf 1 für eine bestimmte Betriebsfunktion erforderliche, bereits erzeugte Passungsbohrungen zur gesonderten, unmittelbaren Positionierung Verwendung finden.

Wie aus der einzigen Zeichnung hervorgeht, umfaßt die Bearbeitungsstation im Bewegungsraum 14 des Industrieroboters 2 entsprechend aufeinanderfolgender, unterschiedlicher Bearbeitungen die Bearbeitungsmaschinen 5, 6, 7, 8 mit den zugeordneten Vorrichtungen 9, 10, 11, 12 in einer vertikalen Anordnung. Dabei kann die Bearbeitungsmaschine 5 zum Bohren von Gewindekernlöchern und die Bearbeitungsmaschine 6 zum diesbezüglichen Gewindebohren dienen. Die Bearbeitungsmaschine 7 ist für das Vorbohren von Passungsbohrungen und die Bearbeitungsmaschine 8 zur Endbearbeitung der Passungsbohrungen durch Reiben vorgesehen. Bei hohen Schnittdrücken der spanabhebenden Bearbeitung bzw. Formgebung kann die Greifeinrichtung 3 des Industrieroboters 2 über eine nicht gezeigte, steuerbare Verriegelungseinrichtung mit jeder der Positionier-Vorrichtungen 9 bis 12 verbindbar ausgebildet sein.

Die zu einem Turm der Bearbeitungsstation angeordneten Bearbeitungsmaschinen 5 bis 8 sind jeweils aus einer Trägerplatte 15 für entsprechend einem vorbestimmten Bearbeitungsbild fest angeordnete, gesonderte Bearbeitungseinheiten 16 gebildet mit einzeln betreibbaren Werkzeugspindeln 17, die mit entsprechenden Werkzeugen für die vorstehend beschriebenen spanabhebenden Bearbeitungen bestückt sind. Über das Geste 18 sind die mit einander in Verbindung stehenden Trägerplatten 15 relativ zum Industrieroboter 2 ortsfest angeordnet.

Eine vorteilhafte Ausgestaltung jeder Bearbeitungsmaschine 5 bis 8 und der jeweils zugeordneten Positionier-Vorrichtungen 9 bis 12 ist dadurch erzielt, daß jede Trägerplatte 15 mit der zugehörigen Positionier-Vorrichtung 9 bis 12 eine Einheit 19 bildet. In jeder Einheit 19 umfaßt jede Positionier-Vorrichtung 9 bis 12 an jeder Trägerplatte 15 jeder Bearbeitungsmaschine 5 bis 8 quer angeordnete Stützplatten 20 mit an den freien Stirnseiten angeordneten Anschlägen 13. Weiter sind an den Stützplatten 20 Paß-Zapfen 21 vorgesehen, die vorzugsweise mit in dem Zylinderkopf 1 bereits gefertigten Paß-Bohrungen zusammenwirken und somit die der gesonderten Positionierung des Zylinderkopfes 1 in der jeweiligen Vorrichtung 9 bis 12 dienenden Passungs-Paarungen bilden.

Weiter kann eine derartige Einheit 19 nicht nur aus einer Positionier-Vorrichtung 9 bis 12 und einer Bearbeitungsmaschine 5 bis 8 gebildet sein, sondern auch als eine Kombination einer Positionier-Vorrichtung 9 bis 12 mit einer zur Montage von Kleinteilen geeigneten, nicht gezeigten Montagemaschine gebildet sein. Weiter können unterschiedliche Einheiten 19 entsprechend den Bearbeitungs- und/oder Montage-Durchführungen an zumindest fünf Seiten eines quaderartigen Zylinderkopfes 1 so angeordnet sein, daß die Verbringung des Zylinderkopfes 1 von Einheit 19 zu Einheit 19 vorzugsweise mittels eines einzigen Industrieroboters 2 erzielt ist. Diese erfindungsgemäße Ausgestaltung erübrigt mehrere, jeweils auf einen besonderen Bearbeitungsfall abgestellte Sondermaschinen.

Die erfindungsgemäße Bearbeitungsstation ist relativ kostengünstig und relativ zu üblichen Sondermaschinen mit geringem Zeitaufwand realisierbar, so daß konstruktive Änderungen rasch in die Serie einfließen können. Gegenüber einer kaum abänderbaren Sondermaschine kann die erfindungsgemäße Bearbeitungsstation mit geringem Aufwand einer Transferstraße oder einer Fertigungszelle mit CNC-Maschinen zugeordnet werden zur Bildung eines flexiblen Fertigungssystems. Weiter ist eine derartige Bearbeitungsstation aber auch als stand-alone-Anordnung geeignet. Insbesondere weist eine derartige Bearbeitungsstation durch die Möglichkeit des einfachen Austausches der Trägerplatten 15 und der Bearbeitungseinheiten 16 der Bearbeitungsmaschinen 5 bis 8 eine hohe Flexibilität auf für erforderliche Umstellungen in der Bearbeitung eines Werkstückes 1.

Im Rahmen der Erfindung ist es auch möglich, daß eine nicht gezeigte Positionier-Vorrichtung relativ zu einer fest angeordneten Bearbeitungsmaschine mittels des Industrieroboters über die ein Werkstück tragende Greifeinrichtung gegen ein Werkzeug verschiebbar ist.

## Patentansprüche

1. Bearbeitungsstation für eine spanabhebende Bearbeitung eines Werkstückes,
- umfassend eine mittels eines mehrachsigen Industrieroboters (2) mit einem an einer roboterseitigen Greifeinrichtung (3) positioniert gehaltenen Werkstück (1) beschickbare Bearbeitungsmaschine (5, 6, 7, 8) mit einer eine Schiebepassungs-Paarung (21) aufweisenden Positionier-Vorrrichtung (9, 10, 11, 12) für das Werkstück (1), wobei
- das während der Bearbeitung an der Greifeinrichtung (3) verbleibende Werkstück (1) mittels des Industrieroboters (2) in Schiebepassungs-Richtung an der Bearbeitungsmaschine (5, 6, 7, 8) spielfrei auf Anschlag (13) gehalten bzw. fixiert ist, und
- gegebenenfalls im Bewegungsraum (14) des Industrieroboters (2) entsprechend aufeinanderfolgender, unterschiedlicher Bearbeitungen mehrere Bearbeitungsmaschinen (5, 6, 7, 8) mit jeweiliger Positionier-Vorrichtung (9, 10, 11, 12) vorgesehen sind,
dadurch gekennzeichnet,
- daß jeweils aus einer Bearbeitungsmaschine (5, 6, 7, 8) und einer Positionier-Vorrichtung (9, 10, 11, 12) gebildete Einheiten (19) entsprechend den unterschiedlichen Bearbeitungen an zumindest fünf Seiten eines quaderförmigen Werkstückes (1) horizontal und/oder vertikal angeordnet sind für eine Verbringung des Werkstückes (1) mittels eines einzigen Industrieroboters (2) von Einheit (19) zu Einheit (19), wobei
- die Bearbeitungsmaschine (5, 6, 7, 8) jeder Einheit (19) aus einer ortsfest angeordneten Trägerplatte (15) für entsprechend einem vorbestimmten Bearbeitungsbild fest angeordnete, gesonderte Bearbeitungseinheiten (16) gebildet ist mit einzeln betreibbaren Werkzeugspindeln (17), und
- daß die Positionier-Vorrichtung (9, 10, 11, 12) jeder Einheit (19) an der Trägerplatte (15) der Bearbeitungsmaschine (5, 6, 7, 8) quer angeordnete Stützplatten (20) umfaßt mit an den freien Stirnenden angeordneten Paß-Zapfen (21) sowie an diesen Stirnseiten vorgesehenen Anschlägen (13).

2. Bearbeitungsstation nach Anspruch 1, dadurch gekennzeichnet, daß die an den Stützplatten (20) angeordneten Paß-Zapfen (21) mit im Werkstück (1) angeordneten Paß-Bohrungen die der gesonderten Positionierung des Werkstückes (1) in/an der Vorrichtung (9, 10, 11, 12) dienenden Passungs-Paarungen bilden.

3. Bearbeitungsstation nach Anspruch 1 und 2, dadurch gekennzeichnet,
- daß die über einem Gestell (18) zu einem ortsfesten Turm angeordneten Bearbeitungsmaschinen (5, 6, 7, 8) über die Tragplatten (15) und die Stützplatten (20) miteinander in Verbindung stehen, und
- daß die Werkzeugspindeln (17) der in/an den Tragplatten (15) angeordneten Bearbeitungseinheiten (16) insbesondere zum Bohren, Senken, Gewindebohren, Reiben etc. entsprechend unterschiedlicher Bearbeitungen eines quaderartigen Zylinderkopfes als Werkstück (1) dienen.

4. Bearbeitungsstation nach den Ansprüchen 1 bis 3, dadurch gekennzeichnet, daß die Greifeinrichtung (3) des Industrieroboters (2) bedarfsweise über eine steuerbare Verriegelungseinrichtung mit der jeweiligen Positionier-Vorrichtung (9, 10, 11, 12) verbindbar ist.

5. Bearbeitungsstation nach den Ansprüchen 1 bis 4, dadurch gekennzeichnet, daß die Positionier-Vorrichtung relativ zu einer fest angeordneten Bearbeitungsmaschine mittels des Industrieroboters (2) über die ein Werkstück (1) tragende Greifeinrichtung (3) gegen ein Werkzeug verschiebbar ist.

6. Verwendung der Bearbeitungsstation nach den Ansprüchen 1 bis 5, gekennzeichnet durch die Anordnung in einem flexiblen Fertigungssystem mittels Zuordnung zu einer Transferstraße oder zu einer Fertigungszelle mit CNC-Maschinen oder als stand-alone-Anordnung.

## Claims

1. A machining station for machining a workpiece,
- comprising a processing machine (5, 6, 7, 8) loadable with a workpiece (1) positioned by a gripper (3) on the side of a multi-shaft industrial robot (2) and with a device (9, 10, 11, 12) comprising a sliding pair of matching fits (21) for positioning the workpiece (1), wherein
- the workpiece (1), which remains on the gripper (3) during machining, is held or fastened without clearance on an abutment (13) on the processing machine (5, 6, 7, 8) by the industrial robot (2) in the sliding-fit direction and
- if required a number of processing machines (5, 6, 7, 8) each with a positioning device (9, 10, 11, 12) are provided within range (14) of the industrial robot (2) for various successive machining operations,
characterised in that
- units (19) each made up of a processing machine (5, 6, 7, 8) and a positioning device (9, 10, 11, 12) are disposed horizontally and/or vertically, corresponding to the various machining operations, on at least five sides of a cuboidal workpiece (1) in order to transfer the workpiece (1) from one unit (19) to another unit (19), using a single industrial robot (2), wherein
- the processing machine (5, 6, 7, 8) of each unit (19) is in the form of a stationary carrier plate (15) for stationary separate machining units (16) corresponding to a predetermined set of machining operations and with individually operated tool spindles (17), and
- the positioning device (9, 10, 11, 12) for each unit (19) comprises supporting plates (20) disposed transversely to the carrier plate (15) of the processing machine (5, 6, 7, 8) and with adjusting plugs (21) and abutments (13) at their projecting ends.

2. A machining station according to claim 1, characterised in that the adjusting plugs (21) on the supporting plates (20) form matching pairs with adjusting bores in the workpiece (1) for separately positioning the workpiece (1) in or on the device (9, 10, 11, 12).

3. A machining station according to claims 1 and 2, characterised in that
- the processing machines (5, 6, 7, 8), arranged in a stationary tower above a frame (18), are connected to one another by the carrier plates (15) and the supporting plates (20) and
- the tool spindles (17) on the processing units (16) disposed in or on the carrier plates (15) are of use in various operations, especially drilling, countersinking, tapping, grinding or the like, when machining a workpiece (1) in the form of a cuboidal cylinder head.

4. A machining station according to claims 1 to 3, characterised in that the gripper (3) on the industrial robot (2) may if required be connected to the respective positioning device (9, 10, 11, 12) by an adjustable locking means.

5. A machining station according to claims 1 to 4, characterised in that the positioning device is movable towards the tool by the gripper (3) bearing a workpiece (1) on the industrial robot (2), relative to a stationary processing machine.

6. Use of the machining station according to claims 1 to 5, characterised by an arrangement in a flexible manufacturing system by being associated with a transfer line or a manufacturing cell with CNC machines or a stand-alone arrangement.

## Revendications

1. Station d'usinage pour effectuer un usinage avec enlèvement de copeaux sur une pièce façonnée,
- comprenant une machine d'usinage (5, 7, 8), susceptible d'être garnie, au moyen d'un robot industriel (2) à plusieurs axes, avec une pièce d'usinage (1) maintenue positionnée sur un dispositif de préhension (3) situé côté robot, avec un dispositif de positionnement (9, 10, 11, 12), présentant un appairage d'ajustement coulissant (21), pour la pièce façonnée (1),
- la pièce façonnée (1), restant sur le dispositif de préhension (3) pendant l'usinage, étant maintenue ou fixée au moyen du robot industriel (2) dans la direction de l'ajustement coulissant sur la machine d'usinage (5, 6, 7, 8), sans jeu, sur une butée (13), et
- le cas échéant plusieurs machines d'usinage (5, 6, 7, 8), équipées d'un dispositif de positionnement (9, 10, 11, 12) respectif, étant prévues pour effectuer des usinages différents, se suivant de manière correspondante, dans l'espace de déplacement (14) du robot industriel (2),
caractérisée en ce que
- chaque fois des unités (19), constituées d'une machine d'usinage (5, 6, 7, 8) et d'un dispositif de positionnement (9, 10, 11, 12), sont disposées horizontalement et/ou verticalement, de manière correspondante aux différents usinages, sur au moins cinq côtés d'une pièce façonnée (1) en forme de parallélépipède, pour placer la pièce façonnée (1) au moyen d'un robot industriel (2) unique, de l'unité (19) à l'unité (19), où
- la machine d'usinage (5, 6, 7, 8) de chaque unité (19) est constituée d'une plaque support (15) disposée de façon localement fixe pour des unités d'usinage (16) séparées, disposées à demeure de manière correspondante à une image d'usinage prédéterminée, avec des broches à porte-outils (17) pouvant fonctionner individuellement, et
- en ce que le dispositif de positionnement (9, 10, 11, 12) de chaque unité (19) comprend des plaques d'appui (20) disposées transversalement sur la plaque support (15) de la machine d'usinage (5, 6, 7, 8), avec des tourillons ajustés (21) disposés sur les extrémités frontales libres, ainsi que des butées (13) prévues sur ces faces frontales.

2. Station d'usinage selon la revendication 1,
caractérisée en ce que
les tourillons ajustés (21) disposés sur les plaques d'appui (20) constituent, avec les perçages ajustés ménagés dans les pièces façonnées (1), les appairages d'ajustement servant au positionnement séparé de la pièce façonnée (1) dans/sur le dispositif (9, 10, 11, 12).

3. Station d'usinage selon les revendications 1 et 2,
caractérisée en ce que
- les machines d'usinage (5, 6, 7, 8) disposées sur un bâti (18) pour constituer une tour localement fixe sont reliées ensemble par l'intermédiaire des plaques support (15) et des plaques d'appui (20), et
- des broches porte-outils (17) des unités d'usinage (16) disposées dans/sur les plaques support (15), en particulier pour effectuer les opérations de perçage/alésage, fraisage-fonçage, taraudage, usinage par abrasion servent à effectuer des usinages différents correspondants d'une culasse du genre parallélépipédique, à titre de pièce façonnée (1).

4. Station d'usinage selon les revendications 1 à 3,
caractérisée en ce que
le dispositif de préhension (3) du robot industriel (2) est susceptible d'être relié en cas de besoin au dispositif de positionnement (9, 10, 11, 12) respectif, par l'intermédiaire d'un dispositif de verrouillage pouvant être commandé.

5. Station d'usinage selon les revendications 1 à 4,
caractérisée en ce que
le dispositif de positionnement peut être déplacé par rapport à une machine d'usinage disposée à demeure, au moyen du robot industriel (2), par l'intermédiaire du dispositif de préhension (3) portant une pièce façonnée (1), contre un outil.

6. Utilisation de la station d'usinage selon les revendications 1 à 5,
caractérisée par
l'agencement en un système de fabrication flexible, par association, en une chaîne transfert ou une cellule de fabrication, avec des machines à commande numérique CNC, ou comme agencement autonome.
